# EUROPÄISCHE PATENTSCHRIFT

(11) **EP 2 780 184 B1**
(45) Veröffentlichungstag und Bekanntmachung des Hinweises auf die Patenterteilung: **14.08.2019**
(21) Anmeldenummer: 12766938.0
(22) Anmeldetag: 17.09.2012
(51) Int. Cl.: B60K 28/06, G08G 1/0967

(54) **VERFAHREN ZUM SICHEREN ABSTELLEN EINES FAHRZEUGES IN EINER NOTSITUATION**
METHOD FOR SAFELY PARKING A VEHICLE IN AN EMERGENCY SITUATION
PROCÉDÉ POUR ARRÊTER UN VÉHICULE DE MANIÈRE FIABLE DANS UNE SITUATION D'URGENCE

(30) Priorität: 14.11.2011 DE 102011086241
(43) Veröffentlichungstag der Anmeldung: 24.09.2014
(73) Patentinhaber: Robert Bosch GmbH, 70442 Stuttgart (DE)
(72) Erfinder: NORDBRUCH, Stefan, 70806 Kornwestheim (DE); KAMMEL, Soeren, San Jose, 95112 CA (US); BUSCH, Peter, 71638 Ludwigsburg (DE); SCHAAF, Gunther, 70806 Kornwestheim (DE); ECKERT, Kurt, 71254 Ditzingen (DE); POECHMUELLER, Werner, 31139 Hildesheim (DE); BECKER, Jan, Palo Alto, 94303 CA (US)
(86) Internationale Anmeldenummer: PCT/EP2012/068212
(87) Internationale Veröffentlichungsnummer: WO 2013/072095

(56) Entgegenhaltungen:
- EP-A1- 0 913 751
- EP-A2- 1 357 529
- WO-A1-2004/101306
- WO-A1-2005/021344
- WO-A1-2006/075489
- WO-A1-2006/127281
- DE-A1- 10 126 224

## Beschreibung

Die Erfindung betrifft ein Verfahren zum sicheren Abstellen eines Fahrzeuges gemäß Patentanspruch 1 und eine Recheneinheit nach Anspruch 15.

### Stand der Technik

Aus DE 10 2007 046 037 B3 ist eine Vorrichtung zur Erhöhung der Sicherheit im Straßenverkehr bekannt. Es ist ein Fahrergesundheitsberechnungsmodul vorgesehen, das aus Signalen von Gesundheitsdaten-Sensoren beispielsweise eine jeweilige vorrangige Interventionssituation berechnet. Es ist ein Interventionsmodul vorgesehen, das die jeweilige Interventionssituation in entsprechende Reaktionen und Maßnahmen umsetzt. Es ist ein Fahrzeugstörmodul vorgesehen, das Fahrzeugdaten an das Interventionsmodul meldet und auf Anforderung des Interventionsmoduls Befehle an einzelne Fahrzeugsubsysteme abgibt, um beispielsweise bei einer plötzlichen Verschlechterung des Gesundheitszustandes eines Fahrers automatisch Maßnahmen zur Minimierung der Gefahren bzw. notwendige Rettungsmaßnahmen einzuleiten. Wird eine akute Gesundheitsgefährdung erkannt, so wird das Fahrzeug automatisch langsam abgebremst und an den rechten Straßenrand gefahren.

Die Offenlegungsschrift WO 2006/127281 A1 zeigt ein Fahrerüberwachungssystem, das einen Fahrerzustand überwacht. Wenn das System erkennt, dass der Fahrer nicht mehr fahrtüchtig ist, so kontaktiert das System Notfallpersonal und stellt das Fahrzeug automatisch ab.

### Offenbarung der Erfindung

Die Aufgabe der Erfindung besteht darin, ein verbessertes Verfahren und eine verbesserte Recheneinheit bereitzustellen.

Die Aufgabe der Erfindung wird durch das Verfahren gemäß Patentanspruch 1 und durch die Recheneinheit gemäß Patentanspruch 15 gelöst.

Weitere vorteilhafte Ausführungsformen der Erfindung sind in den abhängigen Ansprüchen angegeben.

Ein Vorteil des erfindungsgemäßen Verfahrens besteht darin, dass Informationen aus einer externen Datenbank abgefragt werden und vom Fahrerassistenzsystem berücksichtigt werden. Auf diese Weise können beispielsweise aktuelle Informationen über die Umgebung des Fahrzeuges, den Verkehr, das Wetter, die Verkehrslage oder auch aktuelle Informationen über Spursperrungen, Baustellen, eine optimale Haltestelle zum Abstellen des Fahrzeuges von der externen Datenbank abgefragt werden. Somit stehen dem Fahrerassistenzsystem mehr und/oder aktuellere Informationen zur Verfügung. Damit kann das Abstellen des Fahrzeuges sicherer und gegebenenfalls schneller durchgeführt werden.

Das Fahrzeug wird beispielsweise an den Straßenrand gefahren und abgestellt. Abhängig von der Fahrrichtung kann das der rechte oder linke Fahrbahnrand sein. In einer weiteren Ausführungsform wird das Fahrzeug auf der Fahrspur, auf der es sich gerade befindet, abgebremst und angehalten. Beispielsweise wird dabei die Warnblickanlage angeschaltet, um das Anhalten des Fahrzeugs anzuzeigen und den nachfolgenden Verkehr zu warnen. Zudem kann das Vorliegen einer Notsituation an andere Fahrzeuge über eine Datenübertragung in Form einer Fahrzeug zu Fahrzeug-Kommunikation übertragen werden.

In einer weiteren Ausführungsform greift das Fahrerassistenzsystem auf Daten einer digitalen Karte über den Straßenrand zu. Somit kann aufgrund der Daten eine optimale Strategie zum Abstellen des Fahrzeuges am Straßenrand entwickelt werden. Vorzugsweise können Gegebenheiten des Straßenrandes wie z.B. eine Ausfahrt, ein Brückenpfeiler, eine Böschung, eine Fahrbahnbeschaffenheit wie z. B. ein unbefestigter Straßenrand oder eine geteerte Standspur erkannt und berücksichtigt werden. Zudem können die Daten übr den Straßenrand auch von anderen Fahrzeugen über eine Datenübertragung in Form einer Fahrzeug zu Fahrzeug-Kommunikation erhalten werden.

In einer weiteren Ausführungsform wird eine Notsituation erkannt, wenn der Fahrer eine Rückgabe einer Fahrfunktion, die vom Fahrerassistenzsystem ausgeführt wird, nicht übernimmt.

In einer weiteren Ausführungsform wird zur Erkennung einer Notsituation die Müdigkeit, die Abgelenktheit oder der Gesundheitszustand des Fahrers überprüft. Auf diese Weise können Probleme des Fahrers erkannt werden und ein sicheres Abstellen des Fahrzeuges eingeleitet werden.

In einer weiteren Ausführungsform wird zur Erkennung einer Notsituation eine Gewichtsverteilung des Fahrers überwacht. Bei einer vorgegebenen Abweichung der Gewichtsvorteilung von einer vorgegebenen Normverteilung wird eine Notsituation erkannt und ein Abstellen des Fahrzeuges eingeleitet. Durch die Überwachung der Gewichtsverteilung kann beispielsweise eine Ohnmacht des Fahrers und eine damit verbundene Verlagerung des Gewichtes einfach und sicher erkannt werden.

In einer weiteren Ausführungsform wird eine technische Funktion des Fahrzeuges auf eine korrekte Funktionsweise überprüft. Ergibt die Überprüfung, dass die Funktion eine vorgegebene Funktionsfähigkeit nicht erfüllt, so wird eine Notsituation erkannt. Auf diese Weise können auch technische Notsituationen des Fahrzeuges erkannt und zum Auslösen eines sicheren Abstellvorganges berücksichtigt werden.

Beispielsweise kann die Funktionsfähigkeit einer Sicherheitsfunktion wie z. B. einer Bremse oder eines korrekten Reifendrucks mit dem beschriebenen Verfahren überprüft werden.

In einer weiteren Ausführungsform wird mithilfe von Sensoren eine Umgebung des Fahrzeuges erfasst und vom Fahrerassistenzsystem berücksichtigt. Somit kann beispielsweise die aktuelle Verkehrssituation oder die aktuelle Wettersituation wie z.B. Schnee oder Eisglätte erfasst werden und vom Fahrerassistenzsystem beim sicheren Abstellen berücksichtigt werden. Zudem kann auch die Verkehrsdichte, die Geschwindigkeit des fließenden Verkehrs erfasst und vom Fahrerassistenzsystem beim sicheren Abstellen des Fahrzeuges berücksichtigt werden.

In einer weiteren Ausführungsform wird eine Geschwindigkeit eines nachfolgenden Fahrzeuges und/oder ein Abstand vom nachfolgenden Fahrzeug erfasst und vom Fahrerassistenzsystem, insbesondere beim Abbremsen und Spurwechseln während des sicheren Abstellen des Fahrzeuges berücksichtigt. Damit wird weiterhin die Sicherheit während des automatischen Abstellens des Fahrzeuges erhöht.

In einer weiteren Ausführungsform werden Daten über den Straßenrand in Fahrtrichtung bis zu einem festgelegten Abstand zum Fahrzeug auf eine geeignete Haltestelle hin überprüft und eine Haltestelle ausgewählt. Das Fahrerassistenzsystem fährt das Fahrzeug zur ausgewählten Haltestelle und stellt das Fahrzeug dort ab. Somit kann unabhängig von der Information der Sensoren des Fahrzeuges auch unter Berücksichtigung einer weiter entfernten geeigneten Haltestelle ein sicheres Abstellen des Fahrzeuges auf der in einer festgelegten Reichweite befindlichen optimalen Haltestelle ausgeführt werden. Damit wird die Sicherheit beim Abstellen des Fahrzeuges erhöht.

In einer weiteren Ausführungsform werden nach Erkennen einer Notsituation automatisch zusätzlich Daten über die Gesundheit des Fahrers von einer externen Datenbank an eine Rettungsstelle übermittelt. Damit werden der Rettungsstelle wichtige Informationen zur Versorgung eines gesundheitlich angeschlagenen Fahrers zur Verfügung gestellt. Durch den Zugriff auf die externe Datenbank können schnell und einfach die Informationen über den Fahrer zur Verfügung gestellt werden.

In einer weiteren Ausführungsform werden nach Erkennen einer Notsituation automatisch technische Daten über das Fahrzeug an eine Rettungsstelle übermittelt. Dadurch kann beispielsweise die Bergung oder eine technische Reparatur des Fahrzeuges vor Ort verbessert werden. Abhängig von der gewählten Ausführungsform können die technischen Daten des Fahrzeuges von Sensoren des Fahrzeuges erfasst und/oder aus einer internen oder externen Datenbank ausgelesen und übermittelt werden. Der Zugriff auf die externe Datenbank bietet den Vorteil, dass die Daten schnell und zuverlässig übermittelt werden können. Zudem kann beispielsweise unter Abgabe einer Fahrzeugkennung auf eine Datenbank mit umfangreichen Informationen über die verschiedensten Fahrzeuge zugegriffen und die technischen Daten übermittelt werden. Somit kann die Bergung und/oder die Reparatur des Fahrzeuges vor Ort effizienter durchgeführt werden.

In einer weiteren Ausführungsform wird bei Erkennen einer erhöhten Müdigkeit des Fahrers ein Hinweis an den Fahrer ausgegeben, wobei vorzugsweise die Frequenz der Ausgabe oder die Intensität der Ausgabe vom Grad der Müdigkeit des Fahrers abhängt. Somit wird eine verbesserte Warnung des Fahrers erreicht.

Es zeigen:
Fig. 1 eine schematische Darstellung eines Fahrzeuges, einer externen Datenbank und einer Rettungsstelle, und
Fig. 2 eine schematische Darstellung eines Programmablaufs zur Durchführung des beschriebenen Verfahrens.

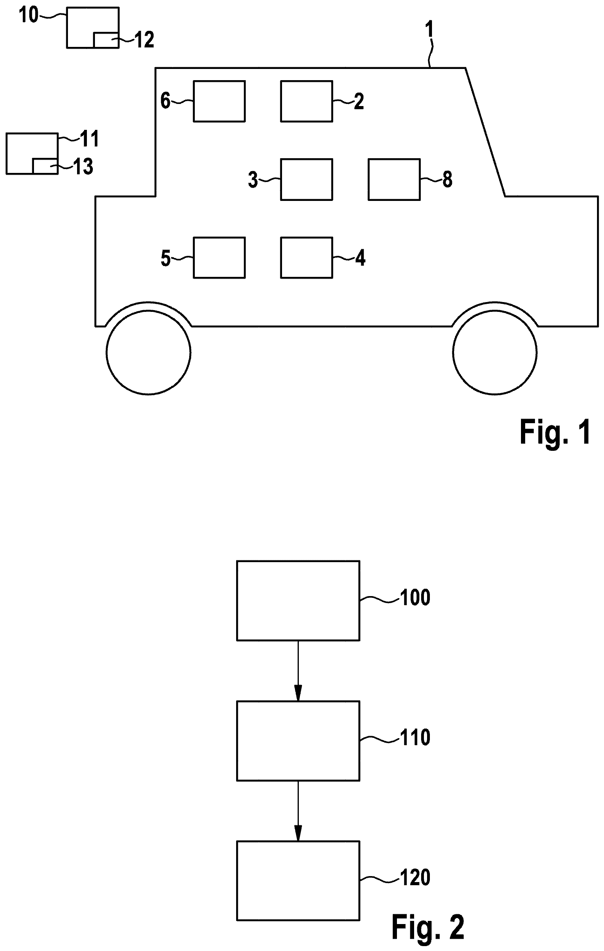

Fig. 1 zeigt in einer schematischen Darstellung ein Fahrzeug 1, das ein Fahrerassistenzsystem 2, eine Überwachungseinheit 3, einen Sensor 4, ein Stellglied 5, eine Kommunikationseinheit 6 und einen Datenspeicher 7 aufweist. Die einzelnen Elemente des Fahrzeuges stehen miteinander über Daten- und/oder Steuerleitungen in Verbindung.
Das Fahrerassistenzsystem kann beispielsweise als Navigationssystem mit einer digitalen Straßenkarte ausgebildet sein. Zudem kann das Fahrerassistenzsystem als automatische Abstandsregelung beispielsweise mithilfe von Radarsensoren und/oder Videosensoren ausgebildet sein, das automatisch einen vorgegebenen Abstand zu einem vorausfahrenden Fahrzeug einhält. Weiterhin kann das Fahrerassistenzsystem als Fahrspurhaltesystem ausgebildet sein, das beispielsweise mithilfe einer optischen Kamera das Einhalten einer Fahrspur regelt. Zudem kann das Fahrerassistenzsystem als Seitenüberwachungssystem ausgebildet sein, das beispielsweise mithilfe von Ultraschallsensoren benachbarte Fahrspuren überwacht und bei einem Spurwechsel bei einer Kollisionsgefahr den Fahrer warnt. Abhängig von der gewählten Ausführungsform kann eines oder mehrere der Fahrerassistenzsysteme im Fahrzeug 1 vorgesehen sein. Die Fahrerassistenzsysteme sind dahingehend ausgelegt, um den Fahrer beim Führen des Fahrzeuges zu unterstützen. Wesentliche Aufgaben sind dabei z. B. die Geschwindigkeitsregelung, das Halten der Fahrspur und die Abstandsregelung.

Die Kommunikationseinheit 6 ist ausgebildet, um eine Datenverbindung zu einer externen Recheneinheit aufzubauen. Die Kommunikationseinheit 6 kann beispielsweise aus einem fest im Fahrzeug 1 installierten Mobiltelefon ausgebildet sein. Zudem kann auch ein mobiles Gerät, beispielsweise ein Smartphone verwendet werden. Mithilfe der Kommunikationseinheit 6 können über einen Zugriff auf einen externen Rechner bzw. eine externe Datenbank aktuelle Informationen über den Verkehr, wie z.B. einen Stau oder einen Unfall oder über die Straßen, wie z.B. eine kurzfristige Straßensperrung erhalten werden. Zudem kann die Kommunikationseinheit 6 ausgebildet sein, um Daten, wie z.B. Positionen und/oder die Geschwindigkeit mit anderen Fahrzeugen auszutauschen. Die Sensoren 4 können beispielsweise in Form eines Radar-, Ultraschall- oder Videosensors ausgebildet sein, um umgebende Objekte zu erfassen, zu erkennen. Weiterhin kann der Sensor 4 als Inertialsensorik ausgebildet sein, um den aktuellen Bewegungszustand des Fahrzeuges zu erfassen. Zudem kann der Sensor 4 als Ortungssystem ausgebildet sein, um die aktuelle Position des Fahrzeuges zu erfassen. Weiterhin kann der Sensor 4 auch als Überwachungssensor ausgebildet sein, um eine Funktion oder ein Verhalten des Fahrzeuges zu erfassen, beispielsweise als Luftdrucksensor im Reifen.

Das Stellglied 5 kann jede Art von Stellglied im Fahrzeug, beispielsweise ein Bremssystem, ein Lenksystem oder ein Einspritzsystem darstellen.

Die Überwachungseinheit 3 ist ausgebildet, um wichtige Vitalfunktionen des Fahrers zu überwachen und bei Erkennen einer defekten Vitalfunktion eine Notsituation zu erkennen und ein sicheres Abstellen des Fahrzeuges mithilfe des Fahrerassistenzsystems zu aktivieren. Dazu können Sensoren 4 verwendet werden, die beispielsweise in Form einer Innenraumkamera oder eines Gewichtssensors ausgebildet ist. Es kann auch jede andere Art von Sensor verwendet werden, um die Vitalfunktion des Fahrers, beispielsweise den Puls zu überwachen. Zudem kann auch eine Messung und Spektralanalyse der Lenkbewegung des Fahrers verwendet werden, um eine Müdigkeit oder eine beeinträchtigte Vitalfunktion des Fahrers zu erkennen.

Beispielsweise können als Sensoren 4 Gewichtssensoren im Sitz des Fahrzeuges 1 vorgesehen sein, die eine Gewichtsverteilung des Fahrers überwachen. Zudem kann im Datenspeicher 7 eine Normverteilung des Gewichtes abgelegt sein.

Die Überwachungseinheit 3 verfügt über eine Recheneinheit 8, mit der die Fahrerassistenzsysteme aktiviert werden können und zudem Informationen von einer externen Datenbank 10 abgefragt werden können oder Informationen an eine Rettungsstelle 11 übermittelt werden können. Die Datenbank 10 ist beispielsweise in Form eines Cloud-Computers ausgebildet und verfügt über aktuelle Informationen über das Wetter, den Straßenzustand und den Verkehr im Aufenthaltsbereich des Fahrzeuges. Zudem können in der Datenbank 10 auch Informationen über das Fahrzeug oder Informationen über den Fahrer, insbesondere Informationen über den Gesundheitszustand oder eine Vorerkrankung des Fahrers abgelegt sein.

Abhängig von der gewählten Ausführungsform weist die externe Datenbank 10 eine zweite Kommunikationseinheit, insbesondere eine Sende/Empfangseinheit 12 auf, mit der Informationen mit dem Fahrzeug 1 und/oder beispielsweise mit einer Rettungsstelle 11 ausgetauscht werden können. Die Rettungsstelle 11 weist ebenfalls eine weitere Kommunikationseinheit z. B. in Form einer Sende/Empfangseinheit 13 auf, um Daten zu empfangen und um Daten zu versenden.

Fig. 2 zeigt einen schematischen Programmablauf zur Durchführung des Verfahrens.

Bei Programmpunkt 100 fährt das Fahrzeug 1 und die Überwachungseinheit 3 überwacht das Verhalten des Fahrers, insbesondere die Vitalfunktion, die Müdigkeit, die Abgelenktheit und/oder die Trunkenheit. Zudem fragt die Recheneinheit 8 laufend mithilfe der Kommunikationseinheit 6 von der externen Datenbank 10 Informationen über das Umfeld des Fahrzeuges, d.h. Informationen über das Wetter, den Verkehr und Zustände der Fahrbahn, insbesondere des Fahrbahnrandes ab. Diese Daten werden im Datenspeicher 7 abgelegt.

Zudem überwacht die Überwachungseinheit 3 bei Programmpunkt 100 die Funktionsfähigkeit des Fahrzeuges, insbesondere die Funktionsfähigkeit von einzelnen wichtigen Komponenten des Fahrzeuges, wie z.B. den Reifendruck, das Bremssystem oder das Einspritzsystem.

Zudem überwacht die Überwachungseinheit 3 die Verteilung des Gewichtes des Fahrers. Dazu sind im Sitz des Fahrers mehrere Gewichtssensoren angeordnet, die die Gewichtsverteilung erfassen und an die Überwachungseinheit 3 übermitteln. Im Datenspeicher ist eine Normverteilung der Gewichtsverteilung abgelegt. Zur Erkennung einer Notsituation, d.h. beispielsweise eines bewusstlosen Fahrers, vergleicht die Überwachungseinheit 3 die über die Gewichtssensoren erfasste Gewichtsverteilung mit der abgelegten Normverteilung. Wird eine vorgegebene Abweichung der gemessenen Gewichtsverteilung von der Normverteilung von der Überwachungseinheit 3 erkannt, so wird eine Notsituation erkannt.

Weiterhin wird eine Notsituation erkannt, wenn die Überwachungseinheit 3 eine Fehlfunktion einer Komponente des Fahrzeuges, eine Abweichung der Vitalfunktion des Fahrers von einer vorgegebenen Vitalfunktion oder bei Erkennen eines festgelegten Müdigkeitszustandes oder eines festgelegten Abgelenktheitszustandes oder einer festgelegten Trunkenheit. Erkennt die Überwachungseinheit 3 bei Programmpunkt 100 eine Notsituation, so wird zu Programmpunkt 110 verzweigt. Bei Programmpunkt 110 entwickelt die Steuereinheit 8 aufgrund der vorliegenden Situation insbesondere unter Berücksichtigung von Daten der externen Datenbank 10 eine Strategie zum sicheren Abstellen des Fahrzeuges am Fahrbahnrand. Dabei werden beispielsweise Daten der externen Datenbank, die das Wetter, den Verkehr und/oder die Beschaffenheit des Fahrbahnrandes beinhalten, bei der Planung der Abstellstrategie berücksichtigt. Zudem kann die Recheneinheit 8 auch auf Daten der Datenbank zugreifen, die beispielsweise die digitale Karte beinhaltet. Bei der Entwicklung der Abstellstrategie wird beispielsweise zuerst erfasst, auf welcher Fahrspur sich das Fahrzeug befindet, ob Fahrzeuge hinter dem Fahrzeug fahren, welchen Abstand die Fahrzeuge haben und welche Geschwindigkeit die hinterher fahrenden Fahrzeuge haben.

Bei der Entwicklung der Abstellstrategie wird mithilfe der Sensoren das Umfeld des Fahrzeuges im Nahbereich erfasst. Dabei wird insbesondere die Geschwindigkeit und/oder der Abstand eines nachfolgenden Fahrzeuges erfasst und beim Abstellen des Fahrzeuges, insbesondere beim Abbremsen des Fahrzeuges berücksichtigt.

Weiterhin überprüft die Recheneinheit 8 vorzugsweise die Beschaffenheit der Fahrbahn und/oder die Beschaffenheit des Straßenrandes in Fahrtrichtung bis zu einem festgelegten Abstand zur Position des Fahrzeuges in Bezug auf eine optimale Haltestelle. Dabei werden die Daten des Datenspeichers 7, insbesondere digitale Daten einer Straßenkarte, die beispielsweise auch in einem Navigationssystem abgelegt sein können, berücksichtigt. Zudem können Daten der externen Datenbank 10 über die Beschaffenheit des Fahrbahnrandes berücksichtigt werden. Bei der Überprüfung über die Eignung des Straßenbahnrandes zum Abstellen des Fahrzeuges wird beispielsweise überprüft, ob am Fahrbahnrand eine Ausfahrt, eine Brücke, ein Grasstreifen oder eine Böschung vorliegt. Diese Gegebenheiten sind für ein Abstellen des Fahrzeuges ungeeignet. Liegt jedoch eine normale geteerte Standspur am Fahrbahnrand vor, so kann diese zum Abstellen des Fahrzeuges verwendet werden.

Nach Erstellen der Abstellstrategie startet die Recheneinheit 8 beim folgenden Programmpunkt 120 die notwendigen Fahrerassistenzsysteme, um das Fahrzeug sicher in der vorliegenden Fahrspur oder am Straßenrand, insbesondere ohne Einwirkung des Fahrers, abzustellen. Das Abstellen kann beispielsweise in einem Abbremsen oder in einem Spurwechsel mit Abbremsen bestehen. Zudem kann beim Abstellen die Warnblinkanlage eingeschaltet werden, um das Abstellen anderen Verkehrsteilnehmern anzuzeigen. Abhängig vom vorliegenden Verkehr wird die Geschwindigkeit des Fahrzeuges über Eingriff in das Bremssystem und das Einspritzsystem reduziert. Zudem wird die Lenkung des Fahrzeuges vom Fahrerassistenzsystem übernommen, wenn die Notsituation auf einer Notsituation des Fahrers beruht. Bei Vorliegen eines technischen Mangels des Fahrzeuges kann die Führung des Fahrzeuges weiterhin vom Fahrer wenigstens teilweise durchgeführt werden.

Zudem kann das Vorliegen einer Notsituation an andere Fahrzeuge über eine Datenübertragung in Form einer Fahrzeug zu Fahrzeug-Kommunikation übertragen werden. Zudem können die Daten über den Straßenrand auch von anderen Fahrzeugen über eine Datenübertragung in Form einer Fahrzeug zu Fahrzeug-Kommunikation erhalten werden.

Das Fahrzeug wird in Richtung auf die optimale Haltestelle nach rechts an den Fahrbahnrand gefahren. Dabei wird bei einem Spurwechsel nach rechts die Verkehrssituation, d.h. auf der rechten Fahrspur fahrende Fahrzeuge vor und hinter dem Fahrzeug berücksichtigt. Zudem wird ein Abstand zu vorausfahrenden Fahrzeugen mithilfe der automatischen Abstandsregelung eingehalten.

Weiterhin können zusätzlich zu dem automatischen Abstellen des Fahrzeuges auch Informationen zu Fahrzeugen im Umfeld des Fahrzeuges abgegeben werden, die anzeigen, dass ein Notfall vorliegt. Dies kann beispielsweise durch Einschalten eines Warnblinkers oder durch Übertragen einer Information, dass eine Notsituation vorliegt, mithilfe der Fahrzeug-zu-Fahrzeug-Kommunikation erfolgen. Zudem kann gleichzeitig mit Erkennen einer Notsituation vom Fahrzeug mit Hilfe der Recheneinheit 8 und der Kommunikationseinheit 6 ein entsprechender Hinweis mit der Angabe der Position des Fahrzeuges, Daten über das Fahrzeug und Daten über den Fahrer, insbesondere über den Gesundheitszustand des Fahrers, an die Rettungsstelle 11 übermittelt werden. Zudem können angestoßen von der Recheneinheit 8 über einen Zugriff auf die Datenbank 10 an die Rettungsstelle 11 weitere Informationen über das Fahrzeug, die Position des Fahrzeuges und Informationen über den Fahrer, insbesondere Informationen über den Gesundheitszustand des Fahrers übermittelt werden. Beispielsweise kann auf eine Krankenakte des Fahrers mithilfe der externen Datenbank 10 zugegriffen werden. Somit verfügt die Rettungsstelle abhängig von der gewählten Ausführungsform über technische Informationen über das Fahrzeug, Informationen über das Umfeld des Fahrzeuges, insbesondere die Haltestelle des Fahrzeuges oder Informationen über den Fahrer, insbesondere Informationen über den Gesundheitszustand und beispielsweise eine gesundheitliche Vorgeschichte des Fahrers. Damit kann sowohl die Rettung des Fahrers in Bezug auf gesundheitliche Aspekte als auch die Bergung des Fahrzeuges oder die Reparatur des Fahrzeuges optimiert werden.

Zur Überprüfung der Aufmerksamkeit des Fahrers kann beispielsweise als Sensor eine intern angebrachte Videokamera verwendet werden, die die Aufmerksamkeit des Fahrers überwacht und bei entsprechenden Anzeichen für Unaufmerksamkeit Warnsignale an den Fahrer ausgibt oder eine Teilfunktion der Fahrfunktion des Fahrzeuges oder die gesamte Fahrfunktion des Fahrzeuges übernimmt.

Zudem kann abhängig von der gewählten Ausführungsform bei Erkennung einer zunehmenden Müdigkeit oder Unaufmerksamkeit von der Überwachungseinheit 3 ein Warnzeichen signalisiert werden oder Angebote für eine Rast angezeigt werden. Zudem kann durch Auswertung des Fahrerzustandes die Frequenz zum Anzeigen von Hinweisen auf Parkplätze bzw. Raststätten oder Cafes erhöht werden. Starke Müdigkeitszeichen werden z.B. durch langes Gähnen oder zufallende Augen erkannt. Abhängig von der gewählten Ausführungsform kann nach einer Übernahme der Fahrfunktion durch die Fahrerassistenzsysteme bei wiederhergestellter Fahrfähigkeit des Fahrers die Fahrfunktion wieder an den Fahrer zurückgegeben werden.

Bei dem automatischen Abstellen des Fahrzeuges werden Daten aus der digitalen Karte des Fahrzeuges unter Berücksichtigung der über Sensoren erfassten Verkehrssituation im Nahbereich des Fahrzeuges berücksichtigt. Zudem können Informationen der Karte für den Fernbereich berücksichtigt werden, wobei beispielsweise überprüft wird, ob eine Haltestelle, insbesondere eine Nothaltestelle oder ein Parkplatz in einer vorgegebenen Entfernung in Fahrrichtung von dem Fahrzeug vorhanden ist.

Die Information über das automatische Abstellen kann an weitere Fahrzeuge oder an einen Verkehrsfunk oder an eine externe Datenbank oder an eine Polizeidienststelle übertragen werden.

In einer weiteren Ausführungsform wird eine Notsituation gemäß Programmpunkt 100 auch dann erkannt, wenn das Fahrerassistenzsystem eine Fahrfunktion ausführt und die Fahrfunktion wieder an den Fahrer zurückgeben will, aber der Fahrer die Zurückgabe nicht annimmt. Dann wird zu Programmpunkt 110 verzweigt und das Fahrzeug automatisch abgestellt. Gibt der Fahrer jedoch während des automatischen Abstellens durch eine Eingabe zu erkennen, dass er die Fahrfunktion jetzt doch übernehmen kann, so wird das automatische Abstellen unterbrochen und die Führung des Fahrzeugs an den Fahrer übergeben. Beispielsweise kann die Fahrfunktion ein automatisches Lenken des Fahrzeugs sein.

## Patentansprüche

1. Verfahren zum sicheren Abstellen eines Fahrzeuges, wobei überprüft wird, ob eine Notsituation vorliegt, wobei nach Erkennen einer Notsituation ein Fahrerassistenzsystem das Fahrzeug sicher abstellt, **dadurch gekennzeichnet, dass** Informationen aus einer externen Datenbank abgefragt werden und vom Fahrerassistenzsystem berücksichtigt werden.

2. Verfahren nach Anspruch 1, wobei Daten einer digitalen Karte über den Straßenrand und/oder Informationen der externen Datenbank über den Straßenrand vom Fahrerassistenzsystem berücksichtigt werden.

3. Verfahren nach einem der vorherigen Ansprüche, wobei das Fahrerassistenzsystem eine Fahrfunktion ausführt, wobei das Fahrerassistenzsystem die Fahrfunktion an den Fahrer zurückgeben will, wobei eine Notsituation erkannt wird und das Fahrzeug vom Fahrerassistenzsystem sicher abgestellt wird, wenn der Fahrer die Übergabe nicht annimmt, wobei insbesondere das Abstellen des Fahrzeugs durch das Fahrerassistenzsystem abgebrochen wird, wenn der Fahrer eine Übernahme der Fahrfunktion anzeigt.

4. Verfahren nach einem der vorhergehenden Ansprüche, wobei zur Erkennung einer Notsituation ein Gesundheitszustand, eine Müdigkeit, Abgelenktheit, eine Trunkenheit des Fahrers überprüft wird.

5. Verfahren nach einem der vorhergehenden Ansprüche, wobei eine Gewichtsverteilung des Fahrers überwacht wird und bei einer vorgegebenen Abweichung der Gewichtsverteilung von einer Normverteilung eine Notsituation erkannt wird.

6. Verfahren nach einem der vorhergehenden Ansprüche, wobei eine technische Funktion des Fahrzeuges überprüft wird und eine Notsituation erkannt wird, wenn die Funktion nicht eine vorgegebene Funktionsfähigkeit aufweist.

7. Verfahren nach einem der vorhergehenden Ansprüche, wobei mithilfe von Sensoren eine Umgebung des Fahrzeuges erfasst wird und vom Fahrerassistenzsystem berücksichtigt wird.

8. Verfahren nach einem der vorhergehenden Ansprüche, wobei eine Geschwindigkeit und/oder ein Abstand eines nachfolgenden Fahrzeuges erfasst wird und vom Fahrerassistenzsystem, insbesondere beim Abbremsen und Spurwechseln berücksichtigt wird.

9. Verfahren nach einem der vorhergehenden Ansprüche, wobei Daten über den Straßenrand in Fahrtrichtung für einen festgelegten Abstand zum Fahrzeug auf eine mögliche Haltestelle überprüft werden, und eine Haltestelle ausgewählt wird, und wobei das Fahrerassistenzsystem das Fahrzeug zur Haltstelle fährt und dort abstellt.

10. Verfahren nach einem der vorhergehenden Ansprüche, wobei vom Fahrzeug nach Erkennen einer Notsituation eine Übermittlung von zusätzlichen Daten über die Gesundheit des Fahrers mit Hilfe einer externen Datenbank an eine Rettungsstelle aktiviert wird.

11. Verfahren nach einem der vorhergehenden Ansprüche, wobei vom Fahrzeug nach Erkennen einer Notsituation eine Übermittlung von technischen Daten über das Fahrzeug an eine Rettungsstelle aktiviert wird.

12. Verfahren nach Anspruch 11, wobei die technischen Daten von Sensoren des Fahrzeuges erfasst oder aus einer internen oder externen Datenbank ausgelesen werden.

13. Verfahren nach einem der vorhergehenden Ansprüche, wobei bei Erkennen einer erhöhten Müdigkeit des Fahrers ein Hinweis an den Fahrer ausgegeben wird, wobei vorzugsweise die Frequenz der Ausgabe oder vorzugsweise die Intensität der Ausgabe vom Grad der Müdigkeit abhängt.

14. Verfahren nach einem der Ansprüche 1 bis 8 und 10 bis 13, wobei das Fahrzeug vom Fahrerassistenzsystem auf der Fahrspur abgebremst wird und angehalten wird oder das Fahrzeug vom Fahrerassistenzsystem an einen Fahrbahnrand gefahren und angehalten wird.

15. Recheneinheit, die ausgebildet ist, um ein Verfahren nach einem der vorhergehenden Ansprüche durchzuführen.

## Claims

1. Method for safely parking a vehicle, wherein it is checked whether there is an emergency situation present, wherein after the detection of an emergency situation a driver assistance system safely parks the vehicle, **characterized in that** information is interrogated from an external database and taken into account by the driver assistance system.

2. Method according to Claim 1, wherein data of a digital map relating to the edge of the road and/or information of the external database relating to the edge of the road are taken into account by the driver assistance system.

3. Method according to one of the preceding claims, wherein the driver assistance system executes a driving function, wherein the driver assistance system wishes to return the driving function to the driver, wherein an emergency situation is detected and the vehicle is safely parked by the driver assistance system if the driver does not accept the transfer, wherein, in particular, the parking of the vehicle is aborted by the driver assistance system if the driver indicates a transfer of the driving function.

4. Method according to one of the preceding claims, wherein a state of health, tiredness, distractedness, drunkenness of the driver are checked in order to detect an emergency situation.

5. Method according to one of the preceding claims, wherein a weight distribution of the driver is monitored and in the case of a predefined deviation of the weight distribution from a normal distribution an emergency situation is detected.

6. Method according to one of the preceding claims, wherein a technical function of the vehicle is checked and an emergency situation is detected if the function does not have a predefined functional capability.

7. Method according to one of the preceding claims, wherein an area surrounding the vehicle is sensed using sensors and is taken into account by the driver assistance system.

8. Method according to one of the preceding claims, wherein a speed and/or a distance of a following vehicle is sensed and is taken into account by the driver assistance system, in particular when braking and changing lane.

9. Method according to one of the preceding claims, wherein data relating to the edge of the road in the direction of travel are checked for a defined distance from the vehicle with respect to a possible stopping point, and a stopping point is selected, and wherein the driver assistance system drives the vehicle to the stopping point and parks it there.

10. Method according to one of the preceding claims, wherein after the detection of an emergency situation the vehicle activates a transmission of additional data about the driver's health using an external database to a first-aid station.

11. Method according to one of the preceding claims, wherein after the detection of an emergency situation the vehicle activates a transmission of technical data about the vehicle to a first-aid station.

12. Method according to Claim 11, wherein the technical data is acquired by sensors of the vehicle or read out from an internal or external database.

13. Method according to one of the preceding claims, wherein when increased tiredness of the driver is detected, an indication is output to the driver, wherein preferably the frequency of the outputting or preferably the intensity of the outputting depends on the degree of tiredness.

14. Method according to one of Claims 1 to 8 and 10 to 13, wherein the vehicle is braked and stopped on the lane by the driver assistance system, or the vehicle is driven to an edge of the carriageway by the driver assistance system and stopped.

15. Computer unit which is designed to carry out a method according to one of the preceding claims.

## Revendications

1. Procédé de stationnement d'un véhicule en toute sécurité, une vérification de la présence d'une situation d'urgence étant effectuée, un système d'assistance à la conduite stationnant le véhicule en toute sécurité après détection d'une situation d'urgence, **caractérisé en ce que** des informations provenant d'une base de données externe sont demandées et prises en compte par le système d'assistance à la conduite.

2. Procédé selon la revendication 1, des données d'une carte numérique relatives au bord de la route et/ou des informations de la base de données externe relatives au bord de la route étant prises en compte par le système d'assistance à la conduite.

3. Procédé selon l'une des revendications précédentes, le système d'assistance à la conduite exécutant une fonction de conduite, le système d'assistance à la conduite voulant renvoyer la fonction de conduite au conducteur, une situation d'urgence étant détectée et le véhicule étant stationné en toute sécurité par le système d'assistance à la conduite si le conducteur n'accepte pas le transfert, le stationnement du véhicule étant en particulier annulé par le système d'assistance à la conduite lorsque le conducteur indique une prise en compte de la fonction de conduite.

4. Procédé selon l'une des revendications précédentes, un état de santé, un état de fatigue, un état de distraction, un état d'ivresse du conducteur étant vérifié pour détecter une situation d'urgence.

5. Procédé selon l'une des revendications précédentes, une distribution de poids du conducteur étant surveillée et une situation d'urgence étant détectée lors d'un écart prédéterminé entre la distribution de poids et une distribution standard.

6. Procédé selon l'une des revendications précédentes, une fonction technique du véhicule étant vérifiée et une situation d'urgence étant détectée lorsque la fonction ne comporte pas de fonctionnalité prédéterminée.

7. Procédé selon l'une des revendications précédentes, un environnement du véhicule étant détecté au moyen de capteurs et étant pris en compte par le système d'assistance à la conduite.

8. Procédé selon l'une des revendications précédentes, une vitesse et/ou une distance d'un véhicule suivant étant détectées et prises en compte par le système d'assistance à la conduite, notamment lors de freinages et de changements de voie.

9. Procédé selon l'une des revendications précédentes, des données relatives au bord de la route dans le sens de roulement sur une distance spécifiée par rapport au véhicule étant vérifiées pour un emplacement de stationnement possible, et un emplacement de stationnement étant sélectionné et le système d'assistance à la conduite amenant le véhicule à l'emplacement de stationnement où il est stationné.

10. Procédé selon l'une des revendications précédentes, une transmission de données supplémentaires relatives à la santé du conducteur à un centre de secours à l'aide d'une base de données externe étant activée par le véhicule après détection d'une situation d'urgence.

11. Procédé selon l'une des revendications précédentes, une transmission de données techniques relatives au véhicule à un centre de secours étant activée par le véhicule après détection d'une situation d'urgence.

12. Procédé selon la revendication 11, les données techniques étant détectées par des capteurs du véhicule ou lues dans une base de données interne ou externe.

13. Procédé selon l'une des revendications précédentes, lors de la détection d'un état de fatigue accrue du conducteur, une indication étant délivrée au conducteur, de préférence la fréquence de délivrance ou de préférence l'intensité de délivrance dépendant du degré de fatigue.

14. Procédé selon l'une des revendications 1 à 8 et 10 à 13, le véhicule étant freiné et arrêté sur la voie de roulement par le système d'assistance à la conduite ou le véhicule étant conduit et arrêté par le système d'assistance au conducteur jusqu'à un bord de la voie de roulement.

15. Unité informatique conçue pour mettre en oeuvre un procédé selon l'une des revendications précédentes.
